# EUROPEAN PATENT APPLICATION

(11) **EP 2 735 982 A1**
(43) Date of publication of application: **28.05.2014**
(21) Application number: 13193684.1
(22) Date of filing: 20.11.2013
(51) Int. Cl.: G06F 17/30, H04L 29/08, H04L 12/58, G06F 19/00

(54) **DICOM image viewer in a web-browser**

(30) Priority: 21.11.2012 US 201213683211
(71) Applicant: General Electric Company, Schenectady, New York 12345 (US)
(72) Inventor: Klotzer, Jason Dieter, Yonkers, NY New York 10705 (US); Padate, Priya Balvant, Palatine, IL Illinois 60067 (US); Jester, Eric Tod, Barrington, IL Illinois 60010 (US); Arlagada, Vijay Kumar Reddy, Barrington, IL Illinois 60010 (US)
(74) Representative: Illingworth-Law, William Illingworth

(57) **Abstract**

Certain examples provide systems and methods for zero footprint medical image viewing. An example system includes a zero footprint viewer 100 including a display pipeline to render and provide image content to a client device without particular configuration of the client device to display and facilitate manipulation of the image content via a client browser. The example system also includes a middle-tier server 120 to retrieve the image content from storage and to convert the image content from a stored format to a browser-convenient format. The example zero footprint viewer 100 includes a first data manager to gather image content from the middle-tier server, and the example middle-tier server includes a second data manager to retrieve the image content and format the image content from the stored format to the browser-convenient format, the second data manager to communicate with the first data manager to facilitate transfer of the image content for display.

## Description

### BACKGROUND

Prior to the rapid onset of digital imaging, patient images were "printed" to film. The film was "hung" and viewed by radiologists, who would then dictate a report. Reports were transcribed by individuals ranging for administrative staff to medical transcriptionists and sent to ordering physician via mail or fax. Critical results were delivered by phone or pager and business statistics were managed via paper reports and spreadsheets.

As information systems for radiology came to market, the first commercially available solutions addressed the needs of the radiologist and the radiology department. These included Radiology Information Systems (RIS) and dictation transcription systems. RIS systems managed the ordering, scheduling, patient and management reporting processes while radiologists were still reading from film.

As modalities started to support the digital display of images on workstations connected to the acquisition device, Picture Archiving and Communications Systems (PACS) came to market. These centrally store images and provide radiologists with the tools to read studies on networked computer monitors, replacing both film and modality workstations.

Over time, the needs of the market have evolved from supporting specialized radiologist workflows to supporting the open and dynamic needs of the enterprise and the community. The vendor community has added systems to manage the need for advanced technologies for better diagnosis; the sharing of images between providers and organizations; to support collaboration between radiologists, physicians and teams providing care for the patient; to close the loop on reporting of critical results and manage the growing storage requirements. Often these are disparate, best-of breed systems that may or may not interoperate, increasing cost and decreasing productivity.

### BRIEF SUMMARY

Certain examples provide systems and methods for zero footprint viewing of medical image data.

Certain examples provide a system including a zero footprint medical image viewer including a display pipeline to render and provide image content to a client device without particular configuration of the client device to display and facilitate manipulation of the image content via a client browser. The example system also includes a middle-tier server to retrieve the image content from storage and to convert the image content from a stored format to a browser-convenient format. The example zero footprint medical image viewer includes a first data manager to gather image content from the middle-tier server and the example middle-tier server includes a second data manager to retrieve the image content and format the image content from the stored format to the browser-convenient format, the second data manager to communicate with the first data manager to facilitate transfer of the image content for display.

Certain examples provide a tangible computer-readable storage medium including computer program code to be executed by a processor, the computer program code, when executed, to implement a zero footprint viewing system. The example system includes a zero footprint medical image viewer including a display pipeline to render and provide image content to a client device without particular configuration of the client device to display and facilitate manipulation of the image content via a client browser. The example system also includes a middle-tier server to retrieve the image content from storage and to convert the image content from a stored format to a browser-convenient format. The example zero footprint medical image viewer includes a first data manager to gather image content from the middle-tier server and the example middle-tier server includes a second data manager to retrieve the image content and format the image content from the stored format to the browser-convenient format, the second data manager to communicate with the first data manager to facilitate transfer of the image content for display.

Certain examples provide a method including receiving a request at a zero footprint viewer to launch an image study at a client browser on a client device, the zero footprint viewer including a display pipeline to render and provide image content in the image study to a client device without particular configuration of the client device to display and facilitate manipulation of the image content via the client browser. The example method includes retrieving the requested image content from storage via a middle-tier server. The example method includes converting, via the middle-tier server, the image content from a stored format to a browser-convenient format. The example method includes providing the converted image content to the zero footprint viewer. The example method includes facilitating display of the converted image content at the client browser via the zero footprint viewer. In the example, the zero footprint medical image viewer includes a first data manager to gather the image content from the middle-tier server and the middle-tier server includes a second data manager to retrieve the image content and format the image content from the stored format to the browser-convenient format, the second data manager to communicate with the first data manager to facilitate transfer of the image content for display.

### BRIEF DESCRIPTION OF SEVERAL VIEWS OF THE DRAWINGS

FIG. 1 illustrates an example zero footprint viewer.
FIG. 2, consisting of FIGS. 2A-2B, illustrates an example system to facilitate web-based browsing of content without addition of components at a client beyond a web-browser.
FIG. 3 depicts a data flow diagram illustrating a sequence of events involved in an example request for image display using a zero footprint viewer
FIG. 4 illustrates an example enterprise imaging system enabled by zero footprint image review.
FIG. 5 illustrates a flow diagram of an example method to provide memory-sensitive image browsing independent of a client device.
FIG. 6 illustrates a flow diagram for an example method to stream lossless image data to a client device.
FIG. 7 illustrates a flow diagram for an example method to facilitate remote function execution on a client device.
FIG. 8 illustrates an example multi-level or multi-layer cache used with a zero footprint image viewer.
FIG. 9 illustrates a flow diagram of an example method to facilitate storage of and access to data in a multi-level cache.
FIG. 10 illustrates a flow diagram of an example method to facilitate compatibility detection for a zero footprint viewer.
FIG. 11 is a block diagram of an example processor system that may be used to implement systems and methods described herein.

The foregoing summary, as well as the following detailed description of certain examples of the present invention, will be better understood when read in conjunction with the appended drawings. For the purpose of illustrating the invention, certain examples are shown in the drawings. It should be understood, however, that the present invention is not limited to the arrangements and instrumentality shown in the attached drawings.

### DETAILED DESCRIPTION OF CERTAIN EMBODIMENTS

### I. Overview

In certain examples, a unified viewer workspace for radiologists and clinicians brings together capabilities with innovative differentiators that drive optimal performance through connected, intelligent workflows. The unified viewer workspace enables radiologist performance and efficiency, improved communication between the radiologist and other clinicians, and image sharing between and across organizations, reducing cost and improving care.

The unified imaging viewer displays medical images, including mammograms and other x-ray, computed tomography (CT), magnetic resonance (MR), ultrasound, and/or other images, and non-image data from various sources in a common workspace. Additionally, the viewer can be used to create, update annotations, process and create imaging models, communicate, within a system and/or across computer networks at distributed locations.

In certain examples, the unified viewer implements smart hanging protocols, intelligent fetching of patient data from within and outside a picture archiving and communication system (PACS) and/or other vendor neutral archive (VNA). In certain examples, the unified viewer supports image exchange functions and implements high performing streaming, as well as an ability to read across disparate PACS without importing data. The unified viewer serves as a "multi-ology" viewer, for example.

In certain examples, a native reading worklist is provided via the unified viewer. The worklist is intuitive and user defined and can include multi-identifier, multi-document, and multi-institution, for example.

Certain examples provide workflow integration via the unified viewer. Workflow integration includes integration with reporting systems, worklists, voice recognition (VR), electronic medical records (EMR); exporting of measurements; exporting of exam notes; thin slice management; etc.

### II. Zero Footprint Medical Image Viewer

Certain examples provide systems, methods, and apparatus for a zero foot print (ZFP) viewer and/or ZFP viewing. The ZFP viewer can display medical images, such as Digital Imaging and Communications in Medicine (DICOM) images, for example. In certain examples, the ZFP viewer can be implemented using Hyper Text Markup Language 5 (HTML5).

In certain examples, having zero footprint can be defined as no administrator rights or special configuration changes required to install and use the application (e.g., radiologist viewer and/or clinician viewer, etc.), providing the application to run on multiple browsers (e.g., Internet Explorer™, Firefox™, Safari™, Chrome™, etc.) and on multiple operating systems (Microsoft™ Windows, Apple OS, iOS, Android™, etc.), providing portability to work on mobile platforms and a variety of device display sizes, require minimal or reduced computing resources (e.g., processor, memory, etc.) at the client, have acceptable performance on low bandwidth connections, etc.

The ZFP viewer can facilitate image viewing and exchange. For example, DICOM images can be viewed from a patient's longitudinal patient record in a clinical data repository, vendor neutral archive, etc. A DICOM viewer can be provided across multiple PACS databases with display of current/priors in the same framework, auto-fetching, etc.

In certain examples, the ZFP viewer is implemented based on a client framework that is able to work with multiple backend architectures. For example, a common interface, icons, annotations, terminology, tools, behaviors, etc., can be provided. An open application programming interface (API) can facilitate multiple bi-directional integrations with external systems such as reporting, EMR, VR, LDAP, etc.

Zero footprint and zero or silent deployment can be facilitated by server-side rendering of images. For example, image processing of advanced applications can occur on the server, rather than the client.

Additionally, events can be synchronization across embedded application. Logs can be generated for learning, indexing, auditing of the user activities, etc.

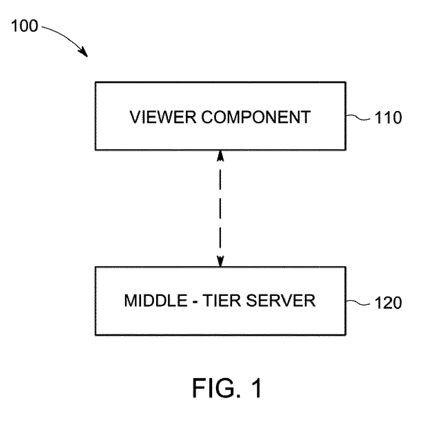

FIG. 1 illustrates an example ZFP viewer 100. The example ZFP viewer 100 is a DICOM medical image viewer that does not require any client installation or downloads of any component, and can run on virtually any hardware that is able to support an HTML5 browser (e.g., all modem hardware and operating systems). The flexibility and lack of client footprint provided by the ZFP viewer 100 is accomplished by providing several components in the viewer 100. The example ZFP viewer 100 of FIG. 1 includes a viewer component 110 and a middle-tier server 120.

The viewer component 110 is the rendering/manipulation component of the ZFP viewer 100 (e.g., a rendering and manipulation engine for the ZFP HTML5 browser). In certain examples, the viewer component 110 uses HTML5 canvas element(s) to facilitate dynamic, scriptable rendering of shapes, images, and/or other graphical elements. In certain examples, the viewer component 110 is also able to render using Web Graphics Library (WebGL). Thus, the viewer engine 110 can provide a variety of dynamic two-dimensional (2D) and/or three-dimensional (3D) renderings for viewing (and interaction) by a user via the ZFP viewer 100.

The middle-tier server 120 drives conversion of image data to a format for viewing (e.g., a browser-friendly or browser-convenient format). The middle-tier server 120 supports transcoding of image data, such as DICOM data, for display via the viewer component 110. For example, the middle-tier serve 120 facilitates transcoding of image pixels Image pixels such as transcoding between DICOM-centric compression format(s) (e.g., Joint Photographic Experts Group committee 2000 (JPEG2000) image compression and coding format, etc.) and format(s) more suitable for modem browsers (e.g., Portable Network Graphics (PNG) image format). For non-image object and meta information, the middle-tier server 120 converts binary-based formats to browser-convenient formats, such as JavaScript Object Notation (JSON), etc.

In certain examples, transcoding is a direct digital-to-digital data conversion of one encoding to another. By facilitating transcoding at the middle-tier server 120, the viewer component 110 and the ZFP viewer 100 as a whole does not have to require a client device (e.g., a phone, tablet computer, laptop computer, desktop computer, etc.) to support a particular file format. Through transcoding, the middle-tier server 120 facilitates operation on a client device having a limited storage capacity and/or by occupying limited space for viewing on the client device regardless of how much space is actually available on the client. Transcoding by the middle-tier server 120 can facilitate conversion of old, incompatible, and/or obsolete data formats to a format suitable for viewing via the viewer component 110. Transcoding can be performed during search and/or presentation of image and/or non-image files, for example. Transcoding can be a lossy or a lossless process, for example. For example, transcoding can be lossless if the input is losslessly compressed and the output is either losslessly compressed or uncompressed. The process of lossy-to-lossy transcoding introduces varying degrees of generation loss.

In certain examples, the middle-tier server 120 performs a two-phase transcoding. First, a data file is decoded into an intermediate, uncompressed format. Second, the intermediate, uncompressed format is encoded into a target format.

In certain examples, data can be re-encoded in the same format for editing, lower bitrate, image scaling, etc. For example, for image editing of a JPEG image, the image file is decoded, edited, and re-encoded via the viewing component 110 and the middle-tier server 120.

In certain examples, files can be transrated to a lower bitrate. Transrating is a process similar to transcoding in which files are coded to a lower bitrate without changing formats. Transrating can include sample rate conversion, for example, but may use a same sampling rate with higher compression. By transrating, media can fit in a smaller storage space, over a lower bandwidth channel, etc.

The middle-tier server 120 can also facilitate image scaling for the viewing component 110. Changing image size is known as transsizing and can be used, for example, if an output resolution differs from a resolution of the media. Imaging scaling can be facilitated by the middle-tier server 120 on playback, via re-encoding, as part of transrating, etc.

Thus, the middle-tier server 120 can employ transcoding to help ensure proper display of content on a diverse variety of devices. The middle-tier server 120 provides an intermediate state of content adaptation to help ensure that source content can be displayed on a target device. In certain examples, the middle-tier server 120 provides real-time (or near real-time) transcoding in a many-to-many format (e.g., "any" input format to "any" output format) to provide search of, display of, and interaction with image and/or other content on a variety of devices via the ZFP viewer 100.

In certain examples, the ZFP viewer facilitates WebSockets-based DICOM image streaming. For example, an image's original format can be maintained through retrieval and display via the ZFP viewer. Certain examples provide programmable workstation functions using a WebSockets transport layer. Certain examples provide JavaScript remoting function translation over WebSockets.

Certain examples provide memory-sensitive image browsing via the ZFP viewer. For example, an amount of resources used can be tracked, and data can be paged off of the server.

Certain examples provide form factor-based streaming technology via the ZFP viewer. For example, based on an available size of a client device, a resolution compressed image is sent to the client viewer for first display while the full lossless image is downloaded in the background.

Certain examples provide scalable vector graphics (SVG) based DICOM grayscale softcopy presentation states (GSPS) for the Web via a ZFP viewer.

Certain examples provide a multi-level image cache middle tier. For example, a middle tier can be provided for data storage so as to avoid storing a large amount of information on the client side.

Certain examples provide an "intelligent" Web browser client capability workflow.

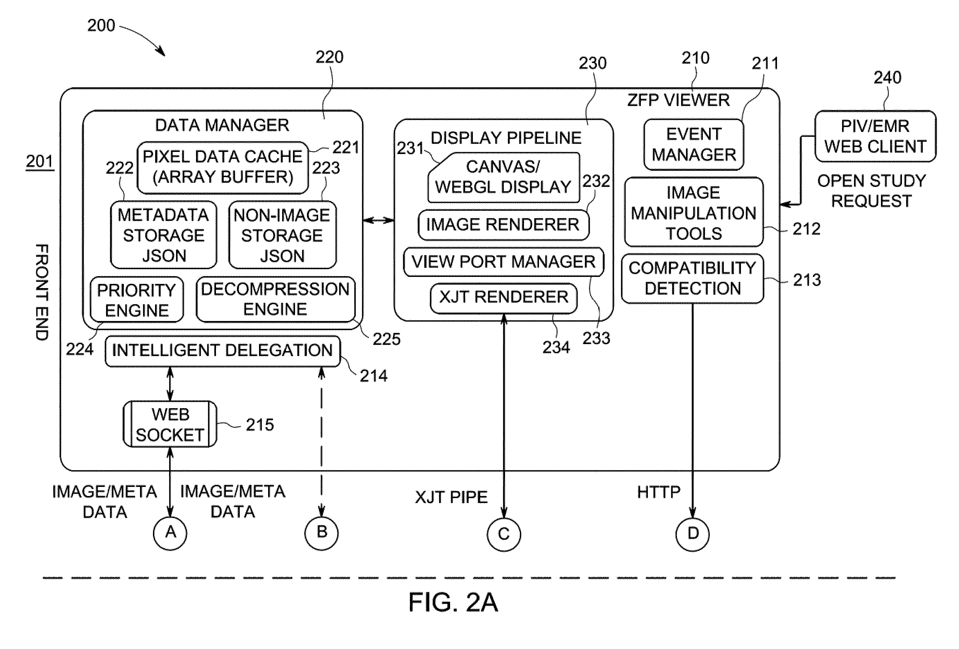

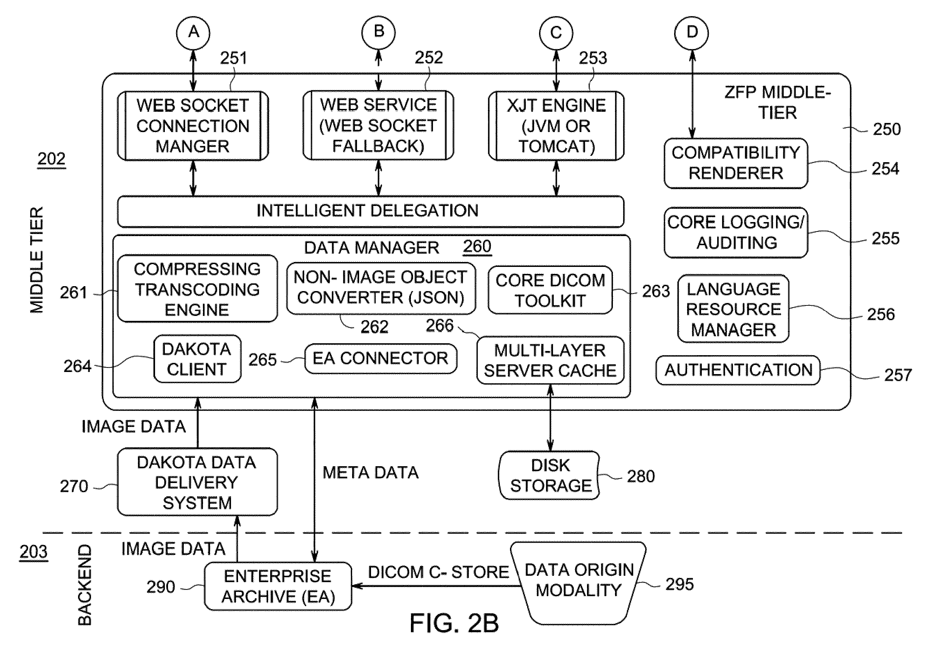

FIG. 2, consisting of FIGS. 2A-2B, illustrates an example system 200 to facilitate web-based browsing of content (e.g., DICOM image studies, etc.) without addition of components at a client beyond a web-browser (likely already installed on the client device).

The example system 200 includes a front end subsystem 201, a middle tier subsystem 202, and a backend subsystem 203. The backend subsystem 203 includes a data store 290, such as an enterprise archive (EA), VNA, etc., receiving data (e.g., DICOM data) from a data source 295, such as an imaging modality, etc.

The middle tier subsystem 202 includes a ZFP middle tier 250. The ZFP middle tier 250 includes a WebSocket connection manager 251, a Web Service 252, an XJT engine 253, a compatibility renderer 254, a logger/auditor 255, a language resource manager 256, and an authenticator 257. Additionally, the ZFP middle tier 250 includes a delegator 258 and a data manager 260. The delegator works with the data manager 260 to interface with the ZFP viewer 210 via one or more of the WebSockets connection manager 251, Web Services 252, and XJT engine 253 and delegate tasks to the data manager 260 to provide content to the ZFP viewer 210. An XJT file is a compressed GIMP (GNU image manipulation program) image file, which can be rendered for display by the XJT engine 253 (e.g., a Java Virtual Machine (JVM), Tomcat, etc., to provide an environment for execution of Java code).

The data manager 260 in the example of FIG. 2 includes a compression and transcoding engine 261, a non-image object converter 262, a DICOM toolkit 263, an image data delivery client 264, an enterprise archive connector 265, and a multi-layer server cache 266. The EA connector 265 communicates with the EA 290 to retrieve and/or store meta data for one or more images also being provided from the archive 290 for display. The multi-layer cache 266 assists the ZFP middle tier 250 in temporarily storing or caching data in conjunction with disk storage 280. The image data delivery client 264 receives image data from an image data delivery system 270.

The front end subsystem 201 includes a ZFP viewer 210. The ZFP viewer 210 includes an event manager 211, image manipulation tools 212, a compatibility detector 213, a delegator 214, a WebSocket 215, a data manager 220, and a display pipeline 230. A web client 240, such as a patient information viewer or electronic medical record client, sends a request, such as an open study request to the ZFP viewer 210, for example, to interact with the viewer 210 to display image data and/or other content.

The display pipeline 230 includes a display driver 231 for HTML5 Canvas, WebGL, etc. The display pipeline 230 also includes an image renderer 232, a viewport manager 233, and an XJT renderer 234 to process and facilitate image and other data display.

The data display manager 220 includes a pixel data cache 221 and/or array buffer, a metadata storage 222, a non-image storage 223, a priority engine 224, and a decompression engine 225. Image and/or other data (e.g., meta data) is provided to the data manager via WebSocket 215, 251 and/or via Web Service 252, for example, and the delegator 214 determines which component(s) of the data manager 220 are to receive and act on the data.

In operation, the web client 240 sends a request to the ZFP viewer 210 to open and display one or more images (e.g., a study). WebSockets 215 and/or other transport mechanism are used to retrieve image and meta information from storage 290, 295 via the ZFP middle tier 250. For example, image data can be provided as binary data over WebSockets 251, 215, and meta data can be provided as JSON data over WebSockets 251, 215. Web Services 252 provide a fallback transfer mechanism if WebSockets do not apply. Retrieved data can be decompressed in the browser-based ZFP viewer 210 (e.g., via the decompression engine 225). Data is prioritized by the priority engine 224 and stored for display in one or more of the metadata storage 222, non-image storage 223, and pixel data cache 221.

Data is provided from one or more of the pixel data cache 221, metadata storage 222, and non-image storage 223 to the display pipeline 230, where the image data is rendered by the image renderer 232 and/or XJT renderer 234 (e.g., based on type of image file) and the viewport or display window is adjusted and/or otherwise configured by the viewport manager 233. Image rendering is facilitated by the display driver 231 (e.g., WebGL for shader-based rendering of high performance images and Canvas as a fall back for basic HTML5 rendering, etc.). The display driver 231 can provide SVG encapsulation for image presentation (e.g., GSPS), for example.

The ZFP viewer 210 further provides the event manager 211 and image manipulation tools 212 to facilitate user interaction with the displayed content via the client 240. The compatibility detector 213 works with the compatibility renderer 254 to determine compatibility for display and resolve and/or flag issues. For example, compatibility and/or other issues can be logged and/or tracked for auditing purposes by the logger/auditor 255. The language resource manager 256 and the authenticator 257 help verify access and help ensure compatibility, for example.

In the ZFP middle tier 250, the image data delivery client 264 retrieves (e.g., streams, etc.) image data from a data store 290, 295 via the data delivery system 270. Data is stored, processed, compressed, transcoded, etc., via the data manager 260 and provided to one or more interface 251, 252, 253 by the delegator 258. For example, the WebSocket connection manager 251 works with the WebSocket 215 on the ZFP viewer 210 to deliver content, with Web Services and/or Windows communication foundation (WCF) as a fallback transport mechanism. The XJT engine 253 interacts with the XJT renderer 225 for three-dimensional rendering. The ZFP middle tier 250 facilitates web-side web technology and implements a model-view-controller (MVC) framework to generate content for display at the Web client 240 as a composition of three roles - model (e.g., track application state), controller (e.g., handle interactions and update the model), and view (e.g., render user interface based on information for the controller). In addition to retrieving image and/or meta data form the backend 203, the middle tier 202 can also provide study information and results to be saved on the data store 290, for example.

Thus, the system 200 provides a single unified viewer that integrates with multiple types of existing back end systems and provides direct online access to images residing on any of the multiple types of existing back end systems, for example.

In certain examples, a format of an original image (e.g., an original DICOM image) is maintained through retrieval and display via a ZFP viewer. One or more image subsections can be requested and used over a communication channel, such as a Transmission Control Protocol (TCP) connection. Using a protocol, such as a WebSocket protocol, direct binary data retrieval can be enabled without encoding. WebSockets provides full-duplex communications over a single TCP connection, for example. Using WebSockets, messages can be passed back and forth between a client browser (e.g., running the viewer component 110 of the example of FIG. 1) and a server (e.g., the middle-tier server 120 of FIG. 1) with an open connection enabling an ongoing bi-directional conversation or exchange of messages conveying information between the server and the browser. Messages can be exchanged as a series of data packets, for example.

In certain examples, an abstract header (e.g., a packet header) is created for each data packet. The header describes and/or otherwise identifies the packet. Using the packet header in conjunction with a block of data, data can be sent as the client wants or expects. For example, DICOM image data can be streamed directly to the browser in the data's native form (e.g., binary).

Rather than encoding and/or otherwise encapsulating the data (e.g., base 64 encoding) at the server, sending the encoded data to the client, and decoding the data at the client via a plugin or applet, WebSocket functionality at the client browser can be used to identify received unencoded data at the protocol level without extra add-on or large increase in overhead. Rather than using a thick client application, encapsulating data as a Web service, or encapsulating data as an application service provider (ASP) call, data can be provided directly to a thin client browser, for example.

Certain examples provide a ZFP medical imaging viewer capable of providing full presentation states (e.g., grayscale softcopy presentation states). A presentation state is an independent DICOM service-object pair (SOP) Instance that includes information regarding how a particular image is to be displayed. For example, a presentation state can include label information (e.g., label type, position, etc.), windowing value, zoom value, scrolling (panning) value, rotation, and/or other visual display element defined within the DICOM standard. A presentation state can be applied to an image so that the image is displayed with the visual specifications defined by the presentation state. Using a presentation state, an image can be displayed in a certain way but is not modified, thereby allowing a program or other user to revert back to the original image, if desired. Presentation states can be sent to a picture archiving and communication system (PACS) and retrieved separate from and/or in conjunction with an image when requested.

For example, a grayscale softcopy presentation state (GSPS) allows a DICOM application entity to specify how stored pixel data values in a composite image object are to be translated to presentation values (P-values) that are independent of device or manufacturer. A display device converts the P-values to luminance for a softcopy display, for example. A grayscale standard display function defines a linearly perceived response and can be used to calibrate display devices such that images appear similar in grayscale contrast when displayed according to transformations specified in the GSPS. As with other presentation states, GSPS allows image display characteristics to be separated from stored image objects and updated independently. In certain examples, the GSPS includes extensions to allow for rotation, zooming, panning, annotation, etc., with vector graphics and plain text. Images can be selected individually and/or as part of a set of images from one or more studies to which the GSPS is to be applied.

Using full presentation states, a DICOM image can run fully on the ZFP viewer without running plugins or special display software on the client device. DICOM information is preserved for an image so that the DICOM information can be directly manipulated on the client (e.g., window level, zoom, pan, etc.).

Certain examples provide a ZFP client viewer that runs on a web browser in HTML5 and is client device independent. The ZFP viewer includes a data manager that allows a user to keep a certain amount of data on the client (e.g., in a middle tier image cache), while paging data back and forth with a server via the data manager. Such "intelligent" paging helps to facilitate memory sensitive image browsing on ZFP Web-based browser. For example, a user can scroll between different images in a study and be unaware that the images are being paged back and forth with the server based on where the images are positioned in the image study.

In certain examples, an open study request is received from a patient information viewer (PIV), electronic medical record (EMR) web client, etc. A display pipeline reads through pixel data for image(s) in the study and applies DICOM attributes to pixel data for display. The modified pixel data is arranged for display using a canvas element, pixel shader, etc.

Via an "intelligent" ZFP Web browser-based viewer, compatibility can be determined. First, compatibility is detected on the client side (e.g., fast and accurate on the client), then compatibility detection results are sent to the server. When the server generates a requested image and/or other information for the client, the server can generate the requested result without extra code that the client will not use. In addition to compatibility rendering, logging, auditing, and resource management are provided via the ZFP viewer.

In certain examples, a run-time multi-level cache (e.g., memory, disk, and source) provides support for a PACS and associated viewer. A ZFP middle tier serves as a proxy for storage on a PACS and/or other data archive (e.g., an enterprise archive, etc.), for example.

A WebSocket connection, for example, serves as a primary connection to provide fast data transfer without encoding. In certain examples, Web services can facilitate data transfer for clients that do not support WebSockets. Rendering of images can be done on the server to be provided to the ZFP client, for example. In certain examples, a WebSockets-based DICOM image streaming protocol prioritizes images in order with compression to a thin-client browser and/or other ZFP HTML viewer on the client, rather than thick client to thick client streaming.

In certain examples, a data manager is provided on a server. The data manager on the server performs data compression and transcoding of data to be sent to a client viewer. In certain examples, the data manager includes a non-image object converter to convert non-DICOM object to usable format.

In certain examples, "memory sensitive" image browsing is facilitated by tracking an amount of resources used and paging requested image data off of the server to send to the browser. In addition to keeping track of an amount of memory used, a receiving client device is analyzed to determine whether the client device is capable of processing a given type of image, for example.

Additionally, form factor-based streaming technology provides, based on available client device characteristics including size (form factor), an initial image compressed at a first resolution for viewing while a full lossless medical diagnostic quality image is downloaded in the background. In certain examples, by accounting for a client device's form factor when streaming image data, images can be rendered on the server for delivery to and display on a device that are specific to the size and/or other characteristic of the device.

For example, if the client device is a handheld or mobile device (e.g., a smart phone, a tablet computer, etc.) and a mammography image (e.g., 8-10 megabytes in size) is selected for display, the user will not typically be able to view the image in a timely manner on the device. However, by facilitating communication between the client device and the server, the client can provide the server with a desired display port size, and the server can create a progressively compressed resolution image. The resulting image can be sent to the client to be displayed in a lowest resolution for the viewport size on the client. The remainder of the data for the image can be transmitted to the client in the background while the user is viewing the lower resolution image on the client device. Thus, a user flexibly receives an appropriate resolution for a type of client device being used to display the image.

In certain examples, scaled and vector graphics (e.g., SVG-based DICOM GSPS) allows tracking of a data plane using extensible Markup Language (XML). Vector graphic coordinates can be represented using XML, and GSPS can be displayed for one or more images. For example, a PACS viewer creates a DICOM GSPS object. A ZFP viewer implements SVG. By encapsulating GSPS in an SVG object, the GSPS can work directly with the image in a ZFP browser in XML. With SVG, annotation can be shown with an SVG parser available in the ZFP viewer. The annotation can be overlaid on the image, and the browser knows how to display the annotation with respect to the image.

In certain examples, a WebSockets transport layer can be used to facilitate programmable workstation functions. While classically a browser has not been able to interact directly with a client other than through activeX components and advanced security privileges, WebSockets allows an application to run on the client that a browser can interact with directly using TCP sockets, for example. For example, multiple monitor support on the client can be facilitated via the browser without instantiating an activeX component. Using WebSockets, a browser can check on and interact with a client device directly. WebSocket connections can facilitate easier and more direct interoperability with third party applications, for example.

In certain examples, a remoting capability can be provided via a ZFP viewer. For example, JavaScript remoting function translation can be facilitated over WebSockets. A proxy can be created on the client side, and the proxy calls the server without translation, for example.

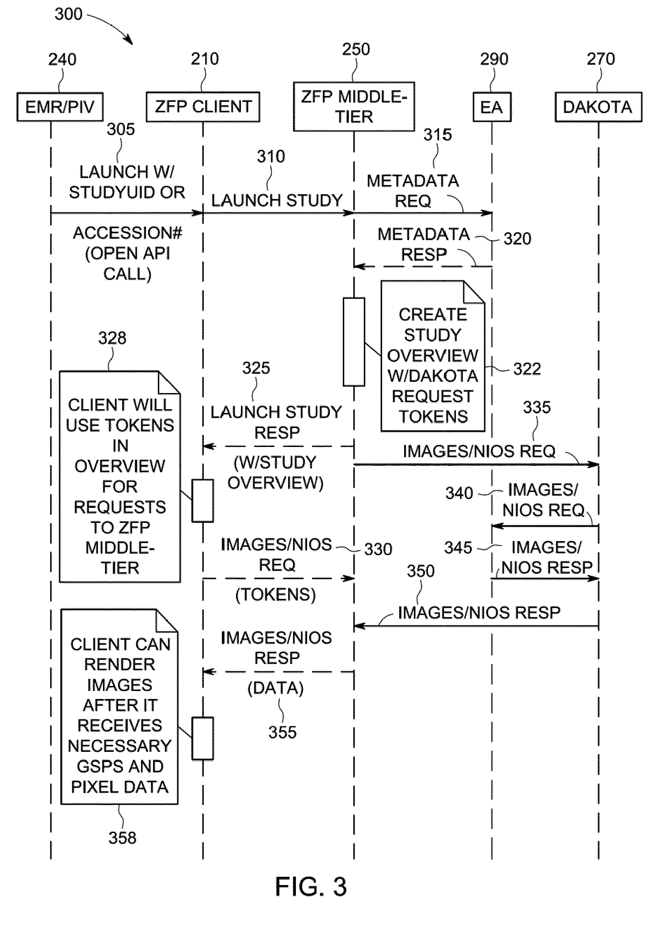

FIG. 3 depicts a data flow diagram illustrating a sequence of events 300 involved in an example request for image display using the ZFP viewer 200. For purposes of illustration, the sequence of events 300 is described in relation to the web client 240, ZFP viewer client 210, ZFP middle tier 250, data archive 290, and streaming engine 270 of the example system 200.

At 305, a request for image display is launch via the web client 240 (e.g., via a PIV, EMR, etc.). The request message 305 may include a study identifier, accession number, etc., to identify the study requested. The ZFP client 210 receives the request 305 and sends a command 310 to launch the study. The ZFP middle tier 250 receives the command 310 and generates a metadata request 315 for the archive 290. The archive/data store 290 sends a metadata response 320 back to the middle tier 290 based on the request 315. The ZFP middle tier 250 creates a study overview 322 based on information from the archive 290 as well as request tokens for the streaming engine 270.

At 325, the ZFP middle tier 250 sends a launch study response including the study overview 322. The ZFP viewer client 210 receives the launch study response 325 and uses tokens in the study overview 322 to generate one or more requests 328 to the ZFP middle tier 250. The ZFP client 210 sends a request 350 for images and/or non-image objects to the ZFP middle tier 250 based on tokens in the request 328.

At 336, the ZFP middle tier 250 sends a request for images and/or non-image objects requested by the ZFP viewer 210 to the streaming engine 270. The streaming engine 270 generates a request 340 for the images/non-image objects to the data archive 290. The archive 290 provides a response 345 to the streaming engine 270 including the requested images and/or non-image data. The streaming engine 270 provides a response 350 including the requested images/non-image data to the ZFP middle tier 250. The ZFP middle tier 250 processes the received image/non-image data and provides data 355 to the ZFP viewer 210 for display. The ZFP viewer client 210 can render images 358 based on received GSPS and pixel data. Rendered image(s) and associated non-image data are then accessible at the web client 240 via the ZFP viewer 210.

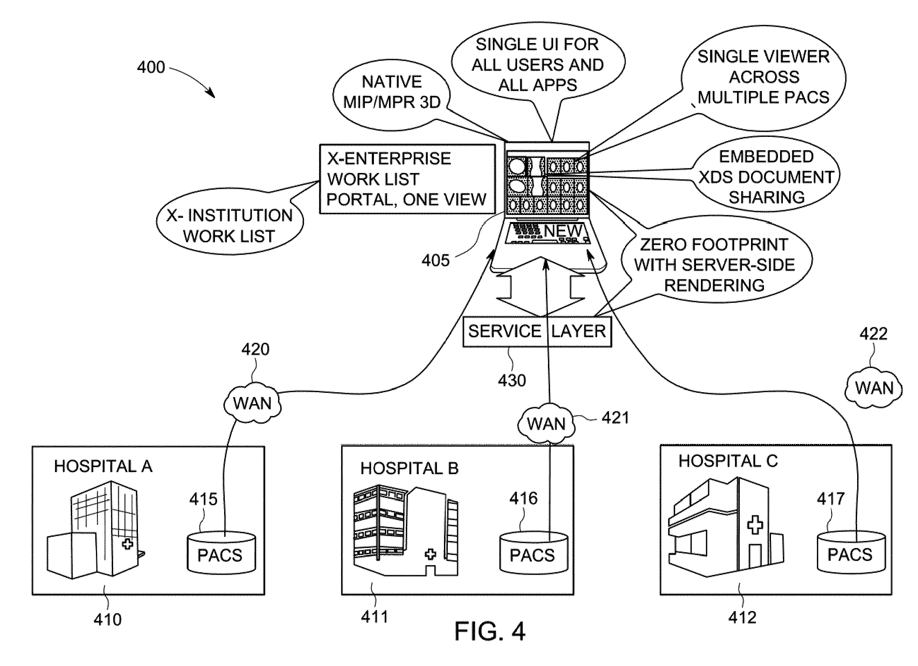

FIG. 4 illustrates an example enterprise imaging system 400 enabled by zero footprint image review. The example system 400 includes a workstation 405 in communication with one or more locations 410-412 via a wide area network 420-422 and a services layer 430. Each location 410-412 includes a PACS 415-417. The workstation 405 provides multi-institution, cross-enterprise worklists and embedded cross-enterprise document sharing (XDS). Native maximum intensity projection/multi-planar reformatting (MIP/MPR) can be provided in two and/or three dimensions. A single, unified interface provided through the workstation 405 is made possible by the ZFP viewer with server-side rendering of image data. A single viewer can be provided across multiple PACS 415-417 for multiple users and multiple applications.

### III. Image Streaming

Certain examples enable streaming of medical images, such as DICOM images, directly to a web browser on a client device, without a need for extra or specialized components (e.g., a ZFP browser or viewer). Using WebSockets associated with HTML5 in a browser provides full bi-directional and binary communication without polling or asynchronous JavaScript (Ajax) calls with a Web or other content server. WebSockets (and/or TCP-based sockets) allow a communication channel to be established through which the client and server send messages back and forth to one another at any given time, as long as the communication channel stays active (e.g., the browser page does not change). DICOM medical images can be sent to a user browser without the need for translation (e.g., no base64 encoding or decoding, etc.).

A WebSockets-based DICOM image streaming protocol within the ZFP viewer facilitates image selection from within a study based on a DICOM service-object (SOP) pair instance unique identifier (UID). The selected image can be a specific frame selected from within a multi-frame image. A specific compression and/or transcoding factor can be provided for a selected image, as can a scaling factor of the original image.

Using the image streaming protocol of the ZFP viewer, subsections of the original DICOM image can be requested. For example, meta information (e.g., from a DICOM image header) can be obtained. Image overlay information, image lookup table (LUT) information, image palette information, etc., can also be obtained and used to stream images via the ZFP viewer.

Further, via the ZFP viewer image streaming protocol, an order of original requested information can be changed. Further, non-image objects (NIOs), such as key objects, structured reports, GSPS, etc., can be requested.

A combination of the above features creates a ZFP solution for streaming DICOM images directly to a web browser using HTML5 WebSockets.

An example image streaming protocol includes receiving a request for image data from a web browser (e.g., a request to open a study). In certain examples, an image streaming engine allows transcoding of image data on the server (e.g., JPEG2000 to JPEG, JPEG to RAW, RAW to JPEG, etc) as well as requesting rescaled or region-of-interests of the original image data. This allows the client to request images specifically catered to a situation (e.g., low bandwidth, high bandwidth, progressive display, etc). In an example, a default is provided for the client to request a 60% quality lossy compressed JPEG of the original image, and then to request the raw data afterwards. This allows the image to be displayed very quickly to the client and while retrieving the lossless (raw) data in the pipe for diagnostic quality image display in follow-up.

### IV. Memory-Sensitive Image Browsing

In certain examples, the ZFP viewer facilitates memory-sensitive image browsing. By tracking an amount of resources used and by paging image data off of a server, image browsing can be zero foot print and memory-sensitive to the client browser. DICOM image studies can be very large, making browsing of DICOM image studies difficult or impractical via the Web. While a standard web browser has approximately two gigabytes of memory at its disposal, some of which is used by the browser itself as well as other web pages that are currently loaded or cached. However, a large DICOM study, such as a 10k CT image study, occupies approximately twice this amount to be stored directly in memory.

In certain examples, the ZFP viewer tracks resources used in the web viewer at all times. Resources include meta information that is stored, raw pixel information, compressed data, non-image objects, etc. While tracking this information, the ZFP viewer can load any information that is being viewed ahead of time (e.g., pre-fetch).

For example, if a user wants to view a 1000 slice CT series from a large CT study, the viewer assumes that the user has to pick a starting point in that series. For example, it can be assumed that the user will start at the beginning of the series and scroll toward the end. Since the user can only scroll at a certain rate and since an amount of space available in memory on the web client is tracked (e.g., a hard coded value for the ZFP web page), the viewer determines approximately how many images to preload in the web viewer so that the user has a fluid experience when scrolling through the images. When the user gets close to the end point of images that are preloaded in the viewer, the viewer "intelligently" purges the images in the series that are further from the images which are displayed (and in the client cache) and pre-caches more data for display. In certain examples, this process is continuous (or at least substantially continuous) while the user is actively viewing a study. The monitoring and prefetching process is very fast, since the server keeps all image information for this study loaded while the user session is active via the ZFP viewer. By paging with the server to process and organize data at the server and display it to the client, the ZFP viewer can support user viewing of extremely large DICOM image sets without special capability in the user's web browser.

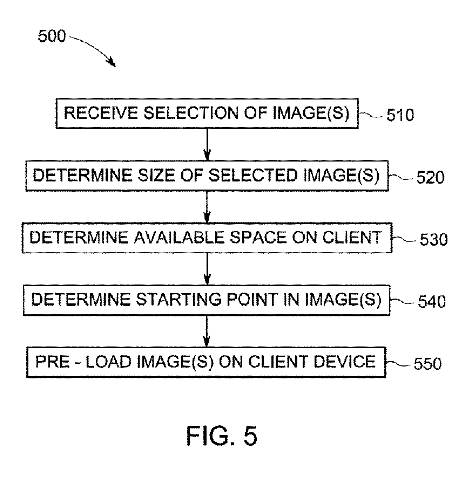

FIG. 5 illustrates a flow diagram of a method 500 to provide memory-sensitive image browsing independent of a client device. At block 510, a selection of an image or image series is received. For example, a user selects a study for retrieval and review via a tablet computer. At block 520, a size of the selected image(s) is determined.

At block 530, data storage space and/or other resource availability on the client device is determined. For example, an amount of cache and/or other memory space currently available on the user's tablet is determined. In certain examples, other conditions affecting available memory and/or browser performance can be identified on the client device (e.g., other programs running on the client device, other memory constraints, available bandwidth, available processing power, etc.).

At block 540, a starting point in the selected image(s) is determined. For example, the user may have selected an image part-way through an image series, or the user may have selected an image study without specifying a starting point such that the system can assume that the user is beginning with the first image in the series, etc. At block 550, based on the starting point, one or more images are pre-loaded on the client device based on one or more factors. For example, starting point, size, available space, other client device and/or connection conditions, etc., are factored in to determine which and/or how many images are to be pre-loaded on the client device. The process 500 continues as the user requests and/or views additional images such that the user's viewing experience on the client device is improved while not overburdening the client device.

### V. Form Factor-Based Streaming

Certain examples provide form factor-based streaming. For example, based on an available size of a client device (e.g., an available display area on a client device such as a desktop computer, laptop computer, tablet computer, smartphone, etc.), a resolution-compressed image is first transmitted for display while a full lossless diagnostic-quality image is downloaded in the background.

While an image browser can retrieve an image from storage on a server and then scale that image to the available viewport, certain examples provide a more efficient, more accurate transmission and rendering, particular for mobile and/or other smaller-screened client devices to view high-resolution images. In order to view large resolution DICOM images, the ZFP viewer requests images for the client device based on the form factor or exact viewport in which the client device is to display the image. For example, if the image being retrieved for display on a mobile or handheld is a computed radiography (CR) mammography image, such an image typically has a much larger "normal" or default display size than that of a handheld device. For example, such an image can be an order of magnitude larger (e.g., 1 megapixel (Mpxl) versus 10 Mpxl).

In this situation, the ZFP streaming component receives a request from the client device including a specific size of the viewport in which the image will be displayed. On the server, the image is resized before the image is transmitted to the client. Then, the properly sized pixels are sent over to the client device for display with no scaling on the client device necessary. By sizing correctly at the server, bandwidth and resources can be saved for the client device.

In certain examples, lossless image data can be viewed at the client device. In order to view a lossless image, the client device is to have the original pixel data of the image. Original image pixel data can be provided through a transcoding method (such as compression/decompression), through raw transfer of data, etc.

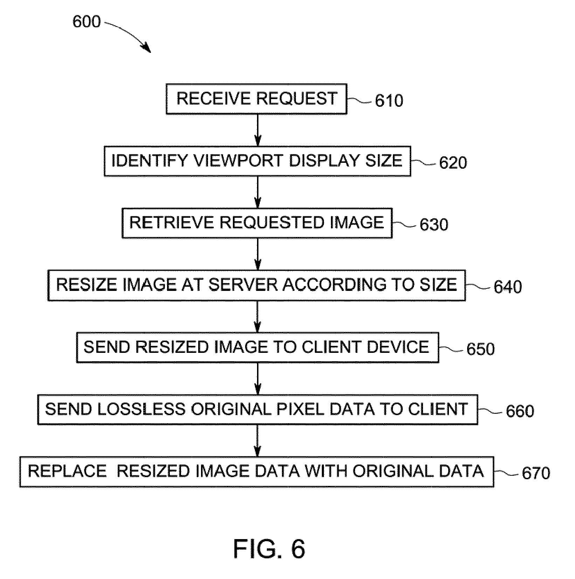

FIG. 6 illustrates a flow diagram for an example method 600 to stream lossless image data to a client device. At block 610, a request for an image is received at the ZFP streaming component (e.g., passed to the image data delivery client 264 and then to the image data delivery system 270) from a client device (e.g., the web client 240). The request from the client includes a viewport display size available for the image. At block 620, the viewport display size is identified from the request by the ZFP streaming component(s).

At block 630, the requested image is retrieved (e.g., from an enterprise archive, etc.). At block 640, the image is resized by the ZFP streaming component(s) according to viewport size/resolution requested. At block 650, the specifically sized image for the resolution/viewport size requested is sent to the client device. In certain examples, when the specific resolution and original image dimensions have a negligible difference, then the original image is sent to the client.

At block 660, lossless, compressed original pixel data (e.g., portable network graphics (PNG) data, graphics interchange format (GIF) data, etc.) is sent from server to client. By sending the original pixel data, when a user zooms an image on the client device, the original pixel data is used to maintain accuracy for higher zoom rates as well as for measurements, etc.

At block 670, once the client device has received the full lossless image pixel data, the resolution compressed image sent at block 650 can be "upgraded" to (e.g., replaced with) the original pixel information. Using the example method 600, small client devices can be used to browse large images. By providing an initial image, a user can begin review, and, when the user would like to manipulate the pixel information of the image directly, the lossless, original pixel information should be available on the client device.

### VI. SVG-Based DICOM GSPS for Image Display

A GSPS (Grayscale Soft-copy Presentation State) is a format to store a modified representation of a DICOM image, including window/level adjustments for grayscale images, annotations, zoom adjustments, rotations, and more. This presentation state is stored in DICOM in a purely binary format, since DICOM itself is primarily binary. However, this binary format is very inconvenient for implementation directly in a web browser. To solve this issue, in the ZFP viewer, elements that are originally stored as a DICOM GSPS are converted into a more web-centric standard format: SVG (Scalable Vector Graphics). SVG allows storage of various scalar elements, including vector data, and customized meta-information in a simple to read/parse XML format. The SVG serves as a parallel for GSPS, since the data storage requirements are similar. In certain examples, GSPS is parsed, rendered, and modified directly in a web browser, without any external tools or plugins.

### VII. Programmable Workstation Functions

In certain examples, programmable client workstation functions can be implemented using a WebSockets transport layer. In many cases, when complex functionality or resource intensive applications need to be deployed on a workstation, the applications are deployed as executables (EXE), libraries (DLL) or other deployment form that is able to execute directly as part of the hardware and not be "interpreted" (e.g., JavaScript) before the code is executed. The application code can also be invoked through a COM-based method invocation if the code is to be consumed by a website (e.g., ActiveX). However, these implementations involve many security requirements to run in a web browser and/or interact with the operating system on the client device (e.g., in Microsoft Windows 8 and Internet Explorer 10, plugins are to be banned from a browser unless running specifically in "desktop" mode). Additionally, many components (e.g., ActiveX components) also require signing to be allowed to run on a client.

In certain examples, a ZFP viewer uses WebSockets, which are fully supported by modem web browsers, to allow the web browser to interact directly with the client device. The direct interaction is accomplished by triggering the client device to run a service or installable component on the client device. The installable component or service is put in a "listen" mode on a predefined communication port of the client device. When a web application on the client is launched, the listening component/service polls for an open connection on a predefined WebSocket port on the ZFP system.

Upon making a connection on the ZFP system, the client application can access functions defined with a WebSocket server that is deployed on the ZFP system (e.g., the WebSocket connection manager 251). For example, the client application can achieve all functionality that can equivalently be wrapped in an ActiveX component, but without the constraints of running the code directly in the browser or requiring additional security authorization for that session. In certain examples, these functions are defined in an interface that is shared between the client and server. The client interface is a loose contract with a pseudo-service layer implemented through WebSockets on the server, for example.

### VIII. Remoting Function Translations

Certain examples provide translation of JavaScript™ remoting function over WebSockets. "Remoting" or remote method invocation is defined within .NET, Java, and other languages, for example. Certain examples define and translate remoting functionality (e.g., implemented in JavaScript) to allow methods executed on a client device to call simple JavaScript code client and then be routed to a ZFP server via an encapsulated WebSocket connection for more involved processing and/or execution. A result or return value is then routed back to the client via the WebSocket connection.

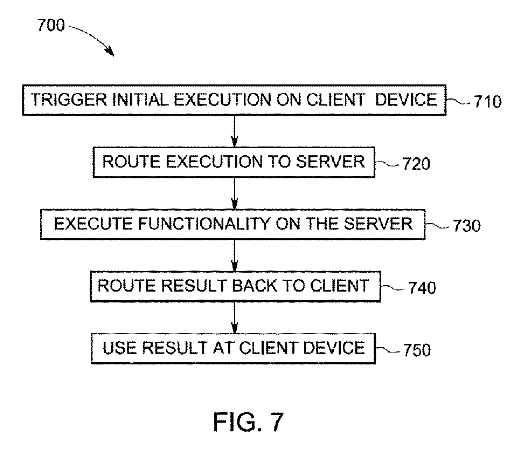

FIG. 7 illustrates a flow diagram for an example method 700 to facilitate remote function execution on a client device. At block 710, a request triggers initial execution of a script or other code on a client device. At block 720, execution is routed to a server or other ZFP system. For example, a basic script begins processing on the client device but then initiates a connection to the server for more involved execution of a desired process. In certain examples, routing to the server is done by serializing method invocation using JSON (JavaScript Object Notation) and passing the serialized block of data to the server through a WebSocket connection.

At block 730, the initiated functionality executes on the server, rather than the client. For example, the server can de-serialize the received block of data and, in a zero footprint example, find an appropriate mapped attribute for the method invocation (e.g., in its .NET code). The server then executes the identified/mapped code.

At block 740, a result is routed back to the client. For example, a return value from the called code is serialized back to JSON and returned to the client via the WebSocket connection, completing the round trip. At block 750, the result is used at the client device. For example, display and/or manipulation of image data is reflected in a browser at the client device.

### IX. Multi-Level Cache Middle Tier

Certain examples provide a multi-level middle tier cache divided by memory, disk, and source-stored. The cache can serve as part of the ZFP middle tier 250 (e.g., the multi-layer server cache 266), for example. ZFP deployment is facilitated by this custom cache to enable a client device to quickly access images without having to retrieve them from their source each time. In the example of the ZFP middle-tier server 250, a multi-level cache is implemented to improve access time and reliability.

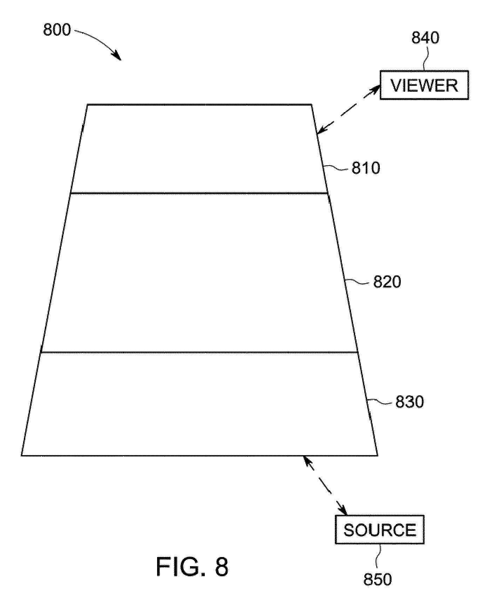

As illustrated in FIG. 8, an example multi-level or multi-layer cache 800 includes three levels: a memory layer 810, a disk layer 820, and a source layer 830.

The memory layer 810 is the fastest layer and has the least space available of the three layers in the example. The memory layer 810 is the "main" memory or a subset of the main memory in the middle-tier server (e.g., middle-tier 250). The memory layer 810 is reserved for the ZFP server's cache use. The memory cache level 810 is used for data that is to be accessed immediately by a ZFP viewer 840, for example.

The disk layer 820 is the middle-speed layer and has a middle or medium amount of space available compared to the other layers. The disk layer 820 is hard disk space on the ZFP server, for example. The disk layer 820 can be a page file on the ZFP middle-tier 250, a memory-mapped file, etc. The disk layer 820 provides significantly slower access than the first layer 810 of the cache (immediate memory), but has much more space available. This cache level 820 is used for data that has been present on the cache 800 for a while (e.g., more than a defined threshold amount of time) (and in all likelihood, this data will not be requested anymore).

The source layer 830 is the slowest layer and represents an original location of the data. In certain examples, a pointer to the original or source data 850 is maintained in the source layer 830 in the ZFP cache 800, so that if a request comes to bring the data online, the pointer can be used to bring the data into the cache from its origin 850 (e.g., the enterprise archive 290, where images are originally stored by the modality. The source cache level 830 is mainly used for data that has a high improbability of being brought online, for example. However, in the case the data is requested, pointers in the source cache 830 provide relatively quick access to the requested information.

The multiple layers 810, 820, 830 of the cache 800 are logically organized and coordinated, even if implemented as separate physical structures, to enable correlation, searching, retrieval, update, and/or other modification at any or all levels, for example.

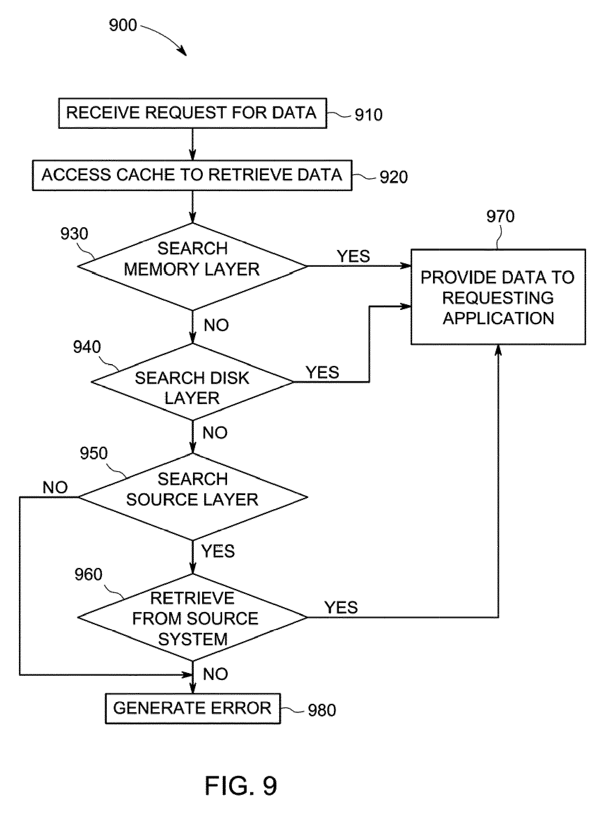

With the implementation of the multi-level cache 800, the ZFP middle-tier server 250 can effectively host studies of various sizes to a large number of users.FIG. 9 illustrates a flow diagram of an example method 900 to facilitate storage of and access to data in a multi-level cache. At block 910, a request for data is received. For example, a ZFP viewer receives a request for image data and/or metadata. At block 920, the multi-layer cache 800 is accessed to retrieve the data.

At block 930, the memory layer 810 is searched to identify the requested data in the fast-access memory cache 810. If the data is found in the memory layer 810, then, at block 970, the data is provided to the requesting application.

If the requested data is not found in the memory layer 810, then, at block 940, the disk layer 820 is searched to locate the requested data. If the data is found in the disk layer 820, then, at block 970, the data is provided to the requesting application.

If the requested data is not found in the disk layer 820, then, at block 950, the source layer 830 is searched to locate the requested data. For example, the source layer 830 is searched to identify a pointer to a location containing the requested data. In most cases, for example, if the requested data is not found in the memory layer 810 or the disk layer 820 of the cache 800 on the middle-tier server 250, then the requested data will be found in another source system identified by a pointer in the source layer 830. At block 960, a source device is queried to retrieve the data based on a pointer in the source layer 830. At block 970, the data is provided to the requesting application. If the data is not found, at block 980, an error is generated.

For example, if the EA 290 is the source device and indicates that some image data is available to retrieve, when in fact the data is in an offline storage (such as a Centera™ archive), the desired image data is brought online to the source system (e.g., the archive 290) first before it can be retrieved.

### X. Intelligent Web Browser Client Compatibility Workflow

Many websites provide compatibility detection code in one of the two locations-client-side or server-side. For client-side compatibility detection, a tool (such as 'modernizer.js') detects client compatibility, enables one or more flags, and executes code based on the enabled flags. A problem with this approach is that there is a lot of "dead code" in the client device that will not be executed because it is not relevant for the currently executing client application. On the server-side, compatibility is determined by the server making a "best guess" regarding a type of client that is connected to the server, based on one or more hypertext transfer protocol (HTTP) variables that are passed from client to server. Variables include browser version, basic client hardware information, etc. However, this server-side approach to compatibility detection is far from accurate in many cases because the server has to maintain a map of the features that are supported in the client and only return code relevant for those features.

Incorrect compatibility detection can result in loss of functionality and/or unexpected results. Compatibility detection not only determines if something is not compatible, but also provides a fallback technology so that under no circumstances does the product not function, for example. For example, detection of a presence of/support for WebGL functionality can be a part of compatibility detection. WebGL functions may not be available to a JavaScript Engine. By detecting if WebGL is available in the browser, the browser can exercise the WebGL functionality, or if not available, then the viewer can implement the same functionality using a different but similar feature such as Canvas rendering, etc.

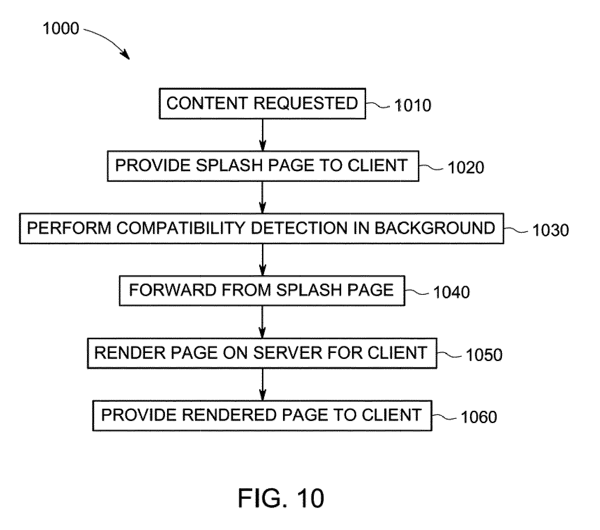

Certain examples provide a zero footprint approach to "intelligent" compatibility detection. FIG. 10 illustrates a flow diagram of an example method 1000 to facilitate compatibility detection for a ZFP viewer. At block 1010, a client viewer requests a page or screen of content. For example, a web client (e.g., browser 240) requests a page of content based on user input, and the request is communicated via the ZFP viewer (e.g., ZFP viewer 210). At block 1020, the client is provided with a splash page, which is an introductory page to provide the client with a status notification or initial information while background detection code (e.g., 'modernizer.js', etc.) is executed (e.g., by the compatibility detector 213 of the ZFP viewer 210) to accurately detect client compatibility. At block 1030, the compatibility detection is performed in the background while the splash screen is displayed. For example, the compatibility detection analyses the elements that are part of a current JavaScript document object model (DOM) to determine features available to the client.

At block 1040, the client is forwarded from the splash page to the page or content screen that was originally requested by the client. In certain examples, since the requested page is a server-side rendered page, the values that were originally detected on the client are passed to the server. A result of the compatibility detection (e.g., a version of the client web browser, client browser support for certain webpage functionality, etc.) factors into the information passed to the server and the rendered of the page by the server, for example.

At block 1050, based on the input values passed to the server from the client, the server accurately renders the client page to be displayed at the client. At block 1060, the server-side rendered page of content is provided to the client for display (e.g., via the ZFP viewer 210 and web client 240).

Thus, certain examples provide a more efficiently rendered webpage of content (e.g., reduced or eliminated "dead code") and a more accurate compatibility, since the compatibility information comes from the client.

### XI. Conclusion

Thus, certain examples provide a zero footprint platform and viewer that facilitates display, manipulation, reformatting, etc., of medical images (e.g., DICOM medical images) without a requirement for client installation, download of viewer component(s) at the client, etc., and which can run on virtually any hardware that is able to support an appropriate browser (e.g., an HTML5 browser). Certain examples provide a viewer component to facilitate image rendering and manipulation; a middle-tier server to support transcoding of data (e.g., DICOM data) for image pixels, metadata, and non-image objects. Using this novel architecture, efficient web based browsing of DICOM image studies can be accomplished without the addition of any extra components at the client system, for example.

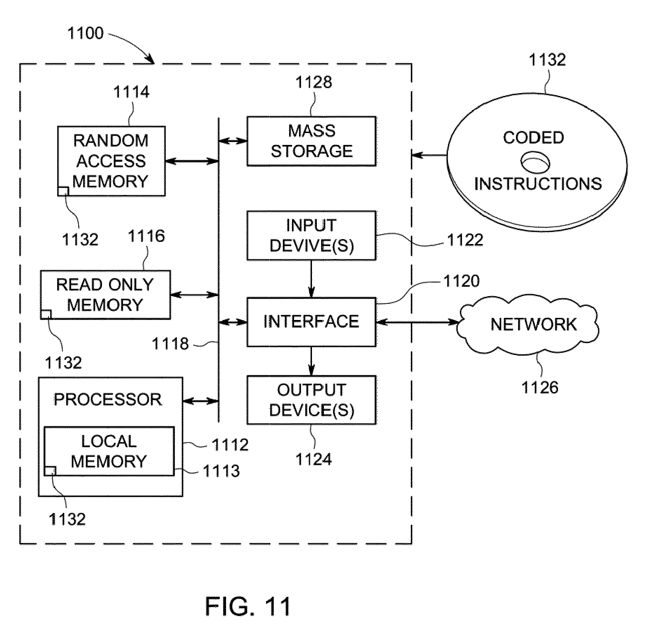

FIG. 11 is a block diagram of an example processor system 1110 that may be used to implement systems and methods described herein. As shown in FIG. 11, the processor system 1110 includes a processor 1112 that is coupled to an interconnection bus 1114. The processor 1112 may be any suitable processor, processing unit, or microprocessor, for example. Although not shown in FIG. 11, the system 1110 may be a multi-processor system and, thus, may include one or more additional processors that are identical or similar to the processor 1112 and that are communicatively coupled to the interconnection bus 1114.

The processor 1112 of FIG. 11 is coupled to a chipset 1118, which includes a memory controller 1120 and an input/output ("I/O") controller 1122. As is well known, a chipset typically provides I/O and memory management functions as well as a plurality of general purpose and/or special purpose registers, timers, etc. that are accessible or used by one or more processors coupled to the chipset 1118. The memory controller 1120 performs functions that enable the processor 1112 (or processors if there are multiple processors) to access a system memory 1124 and a mass storage memory 1125.

The system memory 1124 may include any desired type of volatile and/or non-volatile memory such as, for example, static random access memory (SRAM), dynamic random access memory (DRAM), flash memory, read-only memory (ROM), etc. The mass storage memory 1125 may include any desired type of mass storage device including hard disk drives, optical drives, tape storage devices, etc.

The I/O controller 1122 performs functions that enable the processor 1112 to communicate with peripheral input/output ("I/O") devices 1126 and 1128 and a network interface 1130 via an I/O bus 1132. The I/O devices 1126 and 1128 may be any desired type of I/O device such as, for example, a keyboard, a video display or monitor, a mouse, etc. The network interface 1130 may be, for example, an Ethernet device, an asynchronous transfer mode ("ATM") device, an 802.11 device, a DSL modem, a cable modem, a cellular modem, etc. that enables the processor system 1110 to communicate with another processor system.

While the memory controller 1120 and the I/O controller 1122 are depicted in FIG. 11 as separate blocks within the chipset 1118, the functions performed by these blocks may be integrated within a single semiconductor circuit or may be implemented using two or more separate integrated circuits.

It should be understood by any experienced in the art that the inventive elements, inventive paradigms and inventive methods are represented by certain exemplary embodiments only. However, the actual scope of the invention and its inventive elements extends far beyond selected embodiments and should be considered separately in the context of wide arena of the development, engineering, vending, service and support of the wide variety of information and computerized systems with special accent to sophisticated systems of high load and/or high throughput and/or high performance and/or distributed and/or federated and/or multi-specialty nature.

Certain embodiments contemplate methods, systems and computer program products on any machine-readable media to implement functionality described above. Certain embodiments may be implemented using an existing computer processor, or by a special purpose computer processor incorporated for this or another purpose or by a hardwired and/or firmware system, for example.

One or more of the components of the systems and/or steps of the methods described above may be implemented alone or in combination in hardware, firmware, and/or as a set of instructions in software, for example. Certain embodiments may be provided as a set of instructions residing on a computer-readable medium, such as a memory, hard disk, DVD, or CD, for execution on a general purpose computer or other processing device. Certain embodiments of the present invention may omit one or more of the method steps and/or perform the steps in a different order than the order listed. For example, some steps may not be performed in certain embodiments of the present invention. As a further example, certain steps may be performed in a different temporal order, including simultaneously, than listed above.

Certain embodiments include computer-readable media for carrying or having computer-executable instructions or data structures stored thereon. Such computer-readable media may be any available media that may be accessed by a general purpose or special purpose computer or other machine with a processor. By way of example, such computer-readable media may comprise RAM, ROM, PROM, EPROM, EEPROM, Flash, CD-ROM or other optical disk storage, magnetic disk storage or other magnetic storage devices, or any other medium which can be used to carry or store desired program code in the form of computer-executable instructions or data structures and which can be accessed by a general purpose or special purpose computer or other machine with a processor. Combinations of the above are also included within the scope of computer-readable media. Computer-executable instructions comprise, for example, instructions and data which cause a general purpose computer, special purpose computer, or special purpose processing machines to perform a certain function or group of functions.

Generally, computer-executable instructions include routines, programs, objects, components, data structures, etc., that perform particular tasks or implement particular abstract data types. Computer-executable instructions, associated data structures, and program modules represent examples of program code for executing steps of certain methods and systems disclosed herein. The particular sequence of such executable instructions or associated data structures represent examples of corresponding acts for implementing the functions described in such steps.

Embodiments of the present invention may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the Internet and may use a wide variety of different communication protocols. Those skilled in the art will appreciate that such network computing environments will typically encompass many types of computer system configurations, including personal computers, hand-held devices, multi-processor systems, microprocessor-based or programmable consumer electronics, network PCs, minicomputers, mainframe computers, and the like. Embodiments of the invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing the overall system or portions of embodiments of the invention might include a general purpose computing device in the form of a computer, including a processing unit, a system memory, and a system bus that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD ROM or other optical media. The drives and their associated computer-readable media provide nonvolatile storage of computer-executable instructions, data structures, program modules and other data for the computer.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

Various aspects and embodiments of the present invention are defined by the following numbered clauses:
1. A system comprising:
   a zero footprint medical image viewer including a display pipeline to render and provide image content to a client device without particular configuration of the client device to display and facilitate manipulation of the image content via a client browser; and
   a middle-tier server to retrieve the image content from storage and to convert the image content from a stored format to a browser-convenient format,
   wherein the zero footprint medical image viewer includes a first data manager to gather image content from the middle-tier server and the middle-tier server includes a second data manager to retrieve the image content and format the image content from the stored format to the browser-convenient format, the second data manager to communicate with the first data manager to facilitate transfer of the image content for display.
2. The system of clause 1, wherein the zero footprint medical image viewer comprises an HTML5-based viewer to facilitate image viewing via the client browser.
3. The system of clause 1 or clause 2, wherein the first and second data managers utilize a WebSocket connection to transfer data between the middle-tier server and the zero footprint viewer with a Web service connection available as a fallback for transfer if the WebSocket connection is not available.
4. The system of any preceding clause, wherein the first data manager is to work with the second data manager to determine client device compatibility.
5. The system of any preceding clause, further comprising a streaming image delivery system to provide the image content to the middle-tier server from an archive.
6. The system of any preceding clause, wherein the first and second data managers are to facilitate paging of data back and forth with the middle-tier server based on available memory at the client device.
7. The system of any preceding clause, wherein the first and second data managers facilitate transmission, formatting, and display of at least one of meta information and a non-image object in addition to DICOM image content at the client browser.
8. A tangible computer-readable storage medium including computer program code to be executed by a processor, the computer program code, when executed, to implement a system comprising:
   a zero footprint medical image viewer including a display pipeline to render and provide image content to a client device without particular configuration of the client device to display and facilitate manipulation of the image content via a client browser; and
   a middle-tier server to retrieve the image content from storage and to convert the image content from a stored format to a browser-convenient format,
   wherein the zero footprint medical image viewer includes a first data manager to gather image content from the middle-tier server and the middle-tier server includes a second data manager to retrieve the image content and format the image content from the stored format to the browser-convenient format, the second data manager to communicate with the first data manager to facilitate transfer of the image content for display.
9. The computer-readable storage medium of any preceding clause, wherein the zero footprint medical image viewer comprises an HTML5-based viewer to facilitate image viewing via the client browser.
10. The computer-readable storage medium of any preceding clause, wherein the first and second data managers utilize a WebSocket connection to transfer data between the middle-tier server and the zero footprint viewer with a Web service connection available as a fallback for transfer if the WebSocket connection is not available.
11. The computer-readable storage medium of any preceding clause, wherein the first data manager is to work with the second data manager to determine client device compatibility.
12. The computer-readable storage medium of any preceding clause, further comprising a streaming image delivery system to provide the image content to the middle-tier server from an archive.
13. The computer-readable storage medium of any preceding clause, wherein the first and second data managers are to facilitate paging of data back and forth with the middle-tier server based on available memory at the client device.
14. The computer-readable storage medium of any preceding clause, wherein the first and second data managers facilitate transmission, formatting, and display of at least one of meta information and a non-image object in addition to DICOM image content at the client browser.
15. A method comprising:
   receiving a request at a zero footprint viewer to launch an image study at a client browser on a client device, the zero footprint viewer including a display pipeline to render and provide image content in the image study to a client device without particular configuration of the client device to display and facilitate manipulation of the image content via the client browser;
   retrieving the requested image content from storage via a middle-tier server;
   converting, via the middle-tier server, the image content from a stored format to a browser-convenient format;
   providing the converted image content to the zero footprint viewer; and
   facilitating display of the converted image content at the client browser via the zero footprint viewer,
   wherein the zero footprint medical image viewer includes a first data manager to gather the image content from the middle-tier server and the middle-tier server includes a second data manager to retrieve the image content and format the image content from the stored format to the browser-convenient format, the second data manager to communicate with the first data manager to facilitate transfer of the image content for display.
16. The method of any preceding clause, wherein the first and second data managers utilize a WebSocket connection to transfer data between the middle-tier server and the zero footprint viewer with a Web service connection available as a fallback for transfer if the WebSocket connection is not available.
17. The method of any preceding clause, further comprising determining, via the first and second data managers, client device compatibility.
18. The method of any preceding clause, further comprising first providing an image study overview to the client browser followed by a complete set of rendered images for the image study.
19. The method of any preceding clause, wherein the first and second data managers are to facilitate paging of data back and forth with the middle-tier server based on available memory at the client device.
20. The method of any preceding clause, further comprising facilitating transmission, formatting, and display of at least one of meta information and a non-image object in addition to DICOM image content, via the first and second data managers, at the client browser.

## Claims

1. A system comprising:
a zero footprint medical image viewer (100) including a display pipeline to render and provide image content to a client device without particular configuration of the client device to display and facilitate manipulation of the image content via a client browser; and
a middle-tier server (120) to retrieve the image content from storage and to convert the image content from a stored format to a browser-convenient format,
wherein the zero footprint medical image viewer (100) includes a first data manager to gather image content from the middle-tier server and the middle-tier server includes a second data manager to retrieve the image content and format the image content from the stored format to the browser-convenient format, the second data manager to communicate with the first data manager to facilitate transfer of the image content for display.

2. The system of claim 1, wherein the zero footprint medical image viewer comprises an HTML5-based viewer to facilitate image viewing via the client browser.

3. The system of claim 1 or claim 2, wherein the first and second data managers utilize a WebSocket connection to transfer data between the middle-tier server and the zero footprint viewer with a Web service connection available as a fallback for transfer if the WebSocket connection is not available.

4. The system of any preceding claim, wherein the first data manager is to work with the second data manager to determine client device compatibility.

5. The system of any preceding claim, further comprising a streaming image delivery system to provide the image content to the middle-tier server from an archive.

6. The system of any preceding claim, wherein the first and second data managers are to facilitate paging of data back and forth with the middle-tier server based on available memory at the client device.

7. The system of any preceding claim, wherein the first and second data managers facilitate transmission, formatting, and display of at least one of meta information and a non-image object in addition to DICOM image content at the client browser.

8. A tangible computer-readable storage medium including computer program code to be executed by a processor, the computer program code, when executed, to implement a system according to any of the preceding claims.

9. A method comprising:
receiving a request at a zero footprint viewer to launch an image study at a client browser on a client device, the zero footprint viewer including a display pipeline to render and provide image content in the image study to a client device without particular configuration of the client device to display and facilitate manipulation of the image content via the client browser;
retrieving the requested image content from storage via a middle-tier server;
converting, via the middle-tier server, the image content from a stored format to a browser-convenient format;
providing the converted image content to the zero footprint viewer; and
facilitating display of the converted image content at the client browser via the zero footprint viewer,
wherein the zero footprint medical image viewer includes a first data manager to gather the image content from the middle-tier server and the middle-tier server includes a second data manager to retrieve the image content and format the image content from the stored format to the browser-convenient format, the second data manager to communicate with the first data manager to facilitate transfer of the image content for display.

10. The method of claim 9, wherein the first and second data managers utilize a WebSocket connection to transfer data between the middle-tier server and the zero footprint viewer with a Web service connection available as a fallback for transfer if the WebSocket connection is not available.

11. The method of claim 9 or claim 10, further comprising determining, via the first and second data managers, client device compatibility.

12. The method of any of claims 9 to 11, further comprising first providing an image study overview to the client browser followed by a complete set of rendered images for the image study.

13. The method of any of claims 9 to 12, wherein the first and second data managers are to facilitate paging of data back and forth with the middle-tier server based on available memory at the client device.

14. The method of any of claims 9 to 13, further comprising facilitating transmission, formatting, and display of at least one of meta information and a non-image object in addition to DICOM image content, via the first and second data managers, at the client browser.
